# EUROPEAN PATENT APPLICATION

(11) **EP 1 111 894 A1**
(43) Date of publication of application: **27.06.2001**
(21) Application number: 99850209.0
(22) Date of filing: 22.12.1999
(51) Int. Cl.: H04M 7/00, H04M 3/42

(54) **Communication system and method for establishing a conversation using different link layer thechnologies**

(71) Applicant: TELEFONAKTIEBOLAGET LM ERICSSON, 126 25 Stockholm (SE)
(72) Inventor: Lindberg, Niclas, 126 35 Hägersten (SE); Eriksson, Göran, 172 38 Sundbyberg (SE); Tuoriniemi, Aimo, 164 46 Kista (SE)
(74) Representative: Sandström, Staffan Sven

(57) **Abstract**

The invention is concerned with a method in a communication system for establishing a conversation between two or more users. The communication system comprising user end points, a network, and an intermediate end point, the user end points being connected to the network via different link-layer. In the method, a conversation is invitated by a first user with a second user by means of an invitation signal from the first user over the network. The invitation is received by an intermediate point in the network, which allocates an invitation identity to the invitation. The intermediate point then forwards the invitation together with the invitation identity to the second user over the network. The second user receives the information about the invitation together with the invitation identity, and chooses the end point and/or link-layer technology for responding to the conversation invitation. The second user then responds to the request with the chosen end point and/or link-layer technology by appending the invitation identity. The intermediate point associates the response with said invitation signal and establishes the conversation. The chosen end point and/or link-layer technology is then chosen in the continued establishment and data phase.

## Description

### TECHNICAL FIELD

The invention is concerned with a method in a communication system for establishing a conversation between users, especially in a communication system comprising user end points, access networks and a backbone network between the access networks, the user end points being connected to the network by means of different link-layer technologies.

### BACKGROUND ART

Traditionally, there are different networks for different kind of communication services, such as telephony or data communication. The different services have different requirements on the networks and the associated equipment. Therefore, the networks are traditionally dedicated for given services, which are used by given kind of terminals.

ISDN (Integrated Services Digital Network) is an example of a network for fixed telephony. Mobile telephony has access to the fixed telephony networks and the communication between a fixed telephone and a mobile phone takes place over the fixed telephony networks. This also applies to mobile to mobile communication over GSM (Global Service for Mobile Transmission), or other cellular technologies, such as AMPS (Advanced Mobile Phone System) or PDC (Pacific Digital Telephony). Both fixed telephony and mobile telephony are used for speech communication by means of telephones as terminals. Mobile telephony might also include data services, such as SMS (Short Message Services).

Generally, transmission of data go through data networks, which consists of interconnected computers, such as PCs (Personal Computers) as terminals.

Data communication technologies are evolving and expanding at an unparallelled rate. The growth in demand for Internet access and intranet services continues to fuel rapid technical adaptation by both implementers and developers. An internet work is a collection of individual networks connected by intermediate networking devices (so called nodes), that functions as a single large network. The computers in a data network can be interconnected by different kinds of technologies, such as Ethernet, Token Ring or FDDI (Fiber Distributed Data Interface). Local Area Networks (LANs) are networks covering relatively small geographical areas, while Wide Area Networks (WANs) interconnect LANs.

The transmission part of the communication network can be divided into trunk connections and access connections. The trunk network, consisting of the multiplexing channels with varying capacity, connects the nodes to eachother. The access network consists of the connections between the nodes and the user terminals.

The information signals need transport services for the transmission, which can be maintained by cables, fibers or radio links. The transmission is performed by means of different link-layer technologies, which can be radio links using e.g. cellular technologies like NMT, GSM, or Wireless techniques, like Wireless LAN, Bluetooth techniques or Satellite, or they can be fixed cable technologies using data links like Ethernet or Token Ring or telephony links, like ISDN.

The Open System Interconnection (OSI) reference model describes how information from a software application in one computer moves through a network medium to a software application in another computer. The OSI reference model is a conceptual model of seven layers, each specifying particular network functions. The seven layers of the OSI model are called Application, Presentation, Session, Transport, Network, Data Link and Physical. The upper layers deal with application issues and generally are implemented only in software. The highest layer, application, is closest to the end user. The lower layers handle data transport issues. The physical layer and data link layer are implemented in hardware and software. The other lower layers generally are implemented only in software. The lowest layer, the physical layer, is closest to the physical network medium (e.g. the network cables) and is responsible for placing the information on the medium. Information being transferred from a software application in a computer to a software application in another computer must pass through each of the OSI layers. A given layer in the OSI layers generally communicates with three other OSI layers; the layer directly above it, the layer directly below it, and its corresponding layer in other networked computer systems. For example, the data link-layer in one system communicates with the data link-layer in another system.

The physical layer defines the electrical, mechanical, procedural and functional specifications for the physical link between communicating network systems.

The data link layer provides reliable transmit of data across a physical network link. Different data link layer specifications define different network and protocol characteristics, including physical addressing, network topology, and flow control. Physical addressing (as opposed to network addressing) defines how devices are addressed at the data link layer. Network topology consists of the data link layer specifications that often defines how devices are to be physically connected, such as in a bus (like in Ethernet) or a ring (like Token Ring).

The network layer provides routing and related functions that enable multiple data links to be combined into an internet work. The internet protocol (IP) is a network layer protocol that contains addressing information and some control information for routing. Along with the Transmission Control Protocol (TCP), IP represents the heart of the Internet protocols.

Transport layer functions typically include flow control, multiplexing, and virtual circuit management. An example of a protocol handled by this layer is the Transmission Control Protocol (TCP).

The session layer establishes, manages, and terminates communication sessions between presentation layer entities. Sessions are also called conversations in this text.

The presentation layer provides a variety of coding and conversion functions that are applied to application layer data. Common data representation formats enable the interchange of application data between different types of computer systems.

Today, when a telephone call or a data connection is established in networks designed for given dedicated services, the users are bound to specified network and devices. Thus, when alerting a user in e.g. traditional telephony networks about an incoming communication request, the alerting signal is connected to a certain device, e.g. a POTS (Plain Old Telephony System) telephone. Furthermore, this device is connected to the network via a specific link layer technology. If the user is not available, there is no reply and the request may be forwarded to another device or to an answering machine having another telephone number.

The exchange of connecting information between the user of the service and some node, normally a local station in the network, is called signalling. The user of the service controls the network by the choice of service and the called subscriber. For a common telephone call, the control means that the user lifts up the telephone hook and takes the number of the person to be called after the coupling tone. The network requires the ringing signal to be immediately handled. The nodes in the network have to be ready for the signalling. The handling is somewhat different depending on service and connection type (circuit switching, packet switching). Distributed additional services and mobile telephony set up extra requirements for establishment, control and termination of the connection.

Existing alerting solutions in IP-solutions are e.g. the IETF standard SIP, in which there is a user preference information in the network indicating on which terminal or end point the user shall be alerted, and what to do in case of no reply. If the user is available on several accesses with associated terminals, the network will either poll access by access, or broadcast (transmit the invitation to a set of possible end points/terminals.

The development is going to a more integrated use of the networks, towards interactive wide band services by using multiple link access technologies. Several subscriber categories with different requirements on quality, functionality, availability, quantity, prices etc. result in that the technical solutions in the networks are results of interaction between the requirements on the subscribers, the available technology and the price of that. The available transparence and bandwidth for the different services will increase and availability and terminal mobility will be important.

For example in a future home, there will, in addition to telephony and TV, commonly be used other kinds of technology, like data communication through an IP-network with an increased amount of available services compared with today. A multimedia desktop will be standard equipment in the homes. Also in the companies the internal data and multimedia communications set up new requirements on the technology and devices used.

With the introduction of Internet and IP technology based multimedia, the number of possible ways to communicate will increase considerably. A user may have many communication devices, e.g. a mobile, a laptop, a handheld computer, and/or a dedicated fixed voice terminal. These devices can themselves work on different link-layer technologies.

As mobile telephony and data communication increase, and as the users may have different technologies and equipment available, and as mobility will be increasingly important, more and more requirements are set on the capacity, speed, security and flexibility of e.g. signalling, especially in future integrated service systems. Flexible solutions for establishment, maintenance and termination of conversations in future scenarios, where integrated services are sent across the network, are therefore needed.

The object of the invention is to develop more flexible solutions for establishment of conversations between users and to increase the possibility to choice the desired technology in said establishment.

A more detailed object of the invention is to develop solutions for establishment of conversations to be used in future multimedia desktop solutions described above.

### SUMMARY

The method of the invention in a communication system for establishing a conversation between one or more users, the communication system comprising user end points, a network, and an intermediate end point, the user end points being connected to the network via different link-layer, comprises the steps of inviting a conversation by a first user with a second user by means of an invitation signal from the first user over the network, receiving the invitation by an intermediate point in the network, allocating an invitation identity to the invitation, the intermediate point forwarding the invitation together with the invitation identity to the second user over the network, informing the second user about the invitation together with the invitation identity, the second user choosing the end point and/or link-layer technology for responding to the conversation invitation, the second user responding to the request with chosen end point and/or link-layer technology by appending the invitation identity, the intermediate point associating the response with said invitation signal and establishing the conversation, using the chosen endpoint and/or link-layer technology chosen in the continued establishment and conversation.

The communication system of the invention comprises means for performing the method of the invention.

In the following advantageous embodiments of the invention are described.

The identity allocated can be a RANDOM number or a tag or some other commonly used identity. The intermediate point usually forwards the invitation in accordance with user preference data defining how the invitation shall be forwarded to the second user. The user preference data defines the end point and/or link-layer technology with which invitations to the second user shall be forwarded. The second user is informed about the invitation together with the invitation identity by means of e.g. a ringing signal, a buzz, a flash, or by E-mail.

The second user chooses the end point and/or link-layer technology technology for responding to the conversation invitation on the basis of the available end points and link-layer and on the basis of the art of the invited conversation. The end point chosen by the second user might be a fixed telephone, a mobile phone, a PC, a multimedia desktop, a laptop, or an endpoint belonging to a LAN of the second user. The link-layer technology chosen by the second user is cellular, Ethernet, Token Ring, FDDI, Wireless LAN, Satellite, Bluetooth etc.

The conversation invitation is real time text, audio, audio and text, voice and streaming video, voice and real time video, voice and office tools, Virtual Reality (VR) gaming.

The timers in the conversation establishment protocols are adjusted to allow for the time required for the possible change of end point and/or link-layer technology. The first user can also be informed about the possible change of end point and/or link-layer technology to allow for the time required for the change.

In the invention, a user is alerted about an incoming call by letting the user choose how to respond. The control of the service with respect to the responding method is thus not in the network, but rather in the endpoint(s).

The possibility to choose the way of responding in a way of the invention, is especially important in a situation where the user has one or several end points or terminals to choose between, and one end point or terminal might even have access to the network over multiple link-layer technologies simultaneously, e.g. cellular technologies or fixed technologies. The user can by means of the invention use the wished terminal or endpoint and link-layer technology for responding. The decision of which terminal or endpoint is used, might for example depend on the requested conversation and the requirements for this conversation.

If the calling party invites the user for a demanding video conference conversation, the called part can choose a terminal and link layer technology filling the requirements for such a conversation. If in contrast, the called user does not have the required equipment therefore or if the called user of some other reason wants to change the kind of conversation, it is possible in accordance with the invention for the called party to choose another terminal for this particular conversation by thus reducing the conversation to e.g. real-time text only. The invention also provides solutions to inform the calling party about the change or to allow the extra time required for the change. If the calling part can accept the change of conversation, the new kind of conversation can be established. The described situations might occur in future communication systems were conversation invitations to a called party are made via an intermediate point in the network that handle the invitations. The invitation can in the invention be performed with some user address or the like. This is in contrast to the network based user preference solution of prior art in which the response method is dependent on the invitation method. In the prior art solution, there was e.g. used a telephone number causing a ringing signal in a telephone, which telephone and its link layer technology was used by the called part for responding. Thus, in the invention, the alerting signal is separated from the called user's establishment of the session.

The alerting signaling is done using a generic alerting mechanism independently of service, in which the conversation invitation is uniquely identified. This identification is used when the called user responds to the invitatin, using the preferred device and associated call/session control mechanism and link layer technology. The invitation identity was generated by the intermediate point for the alerting invitation signal, and is unique for the request. The intermediate point of the invention is a Multiple Access Session Handler (MASH), e.g. a server, via which the invitation signals are sent and by which they are handled in a way according to the invention. The invitation identity was appended to the invitation sent to the called end point(s) in a way according to the user preference.

The invention is applicable in situations, wherein a user has more than one terminals, so called end points for communications, like a fixed telephone, a mobile phone, a PC, a laptop, a hand-held computer etc. The user might in the future even have a local LAN of different devices, in which each terminal is referred to as an end point. The preference may indicate, for example that the user wishes to be alerted on his mobile phone or on his PC, or even a microphone belonging to some of the terminals of the user.

To allow for the extra time required for the change, the user shall have enough time to react to the alerting, decide whether to respond on the request using the same terminal used for the alerting, or whether to change to another. Therefore, the timers in the session establishment protocols which decides the time at which the request is given up or at which it is transferred to an answer machine if no answer is got are increased when necessary. Another possibility to allow for the extra time required for the change is to send a message to the caller, who then become conscious about the change and the need of extra time.

In the following, the invention is described by means of figures exemplifying some embodiments. The invention is not restricted to the details of these embodiments.

### DRAWINGS

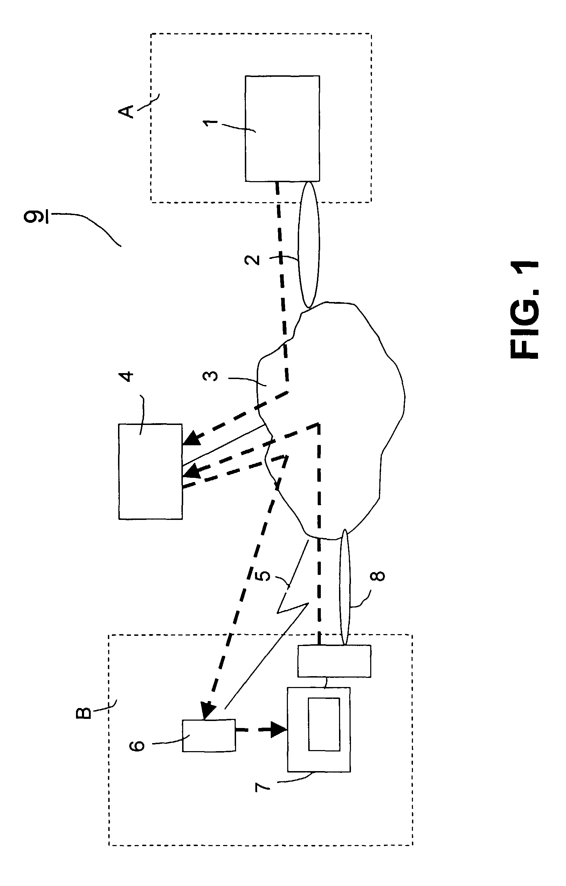

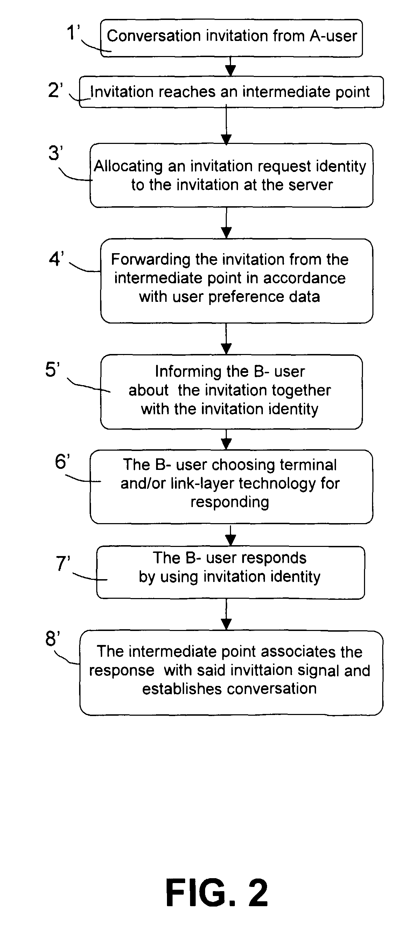

Figure 1 is a general view over the environment, wherein the invention is used Figure 2 is a block scheme of the principle of the invention.

### DETAILED DESCRIPTION

Figure 1 shows the functional architecture of an example of a communications system 9 of the invention. The communication system 9 comprises user end points 1, 6, 7, physically connected by a backbone network 3 thereby forming a common address domain. A user making an invitation for a conversation is here called A-user, whereas the user to which the invitation is made is called B-user. The end points of the A- respective B-users are indicated with restricted dotted line areas.

A Multiple Access Session Handler (MASH) 4 is also connected to the network 3. The MASH 4 is a host, such as an IP-host in the network 9, available for all users wishing to have a conversation with user B, the main task of the server 4 being to act as a contact between communicating parties. The MASH 4 keeps data for the manner in which the B-user wishes incoming traffic to be handled. The signal path of the invitation form A-user to MASH and to B-user and the response of the B-user in accordance with the example of figure 1 are shown with a dotted arrow.

In the invention, the user preference data also covers the choice of endpoint/terminal and link-layer technology to be used in first hand. This decision is based on (a) the wished conversation, e.g. real time text, only voice, or voice and real time video, voice and streaming video, voice and office tools, Virtual Reality (VR) gaming, (b) which end points/terminals and link layer technologies user B has, in other words how B user can be reached, e.g. via cellular access to a mobile phone, via fixed access to a telephone or to a PC or with Bluetooth from wall to terminal, etc., the cost, and (c) how it is stated in the user preference data of B in MASH 4 that the first try to reach user B shall take place.

In addition to route the request in accordance with the wishes of the end user, the server adds an unique identity to the request, such as a RANDOM number or a tag. This identity makes it possible for the MASH to associate the response to this request even if the response come from another access, e.g. a cellular response to a fixed access technology request.

If user A send an invitation via MASH 4 to user B by using a given link layer technology and B wants to answer the invitation with another access technology/terminal/end point, it might take some time for B to change terminal/access or both. As the originating A-side necessarily is not conscious about the change being made by B, the waiting time of A might need to be extended compared to conventional waiting times in alerting. Timers in A user's terminal, that handles the waiting times, can in the invention be adapted in accordance with the time needed. The MASH can e.g. adapt its own timer to decide at a given time when there is "no reply" and/or it can generate a message to the A-side so that the timer at A-user's terminal would not time out if there is an ongoing change on the B-side, and a message to the A-user can be generated by A user's terminal.

In figure 1, A user A terminal 1 is connected to the network 3 via any link layer technology 2, which might be for example cellular technologies or Ethernet, Wireless LAN, Satellite, a virtual reality room etc. The terminal can vene be connected with more than one link layer technology to the network, which link 2 therefore is indicated with two lines in the figure. Another user B has both a mobile phone 6 and a PC 7 connected to the network 3. The mobile phone 6 is connected via a radio link access technology 5, to the network 3. The radio access technology might be for example GSM or UMTS or another radio access technology, while the PC is connected via e.g. a fixed access technology link 8, such as cable by Ethernet or Token Ring, Wireless LAN etc. and as the terminal of A-user also the PC 7 might be connected with more than one link layer technology to the network, and therefore the link is indicated with two lines.

The principle of the invention is presented in the block scheme of figure 2. A first user A initiates (invites) a conversation in step 1' by means of an invitation signal from terminal 1 to a second user B by taking the address of user B, which can be a telephone number, an E-mail address or the like. The invitation signal reaches an intermediate point, such as a MASH 4 in step 2' via the link 2 of terminal 1 and over the network 3. The MASH 4 allocated a invitation identity to the invitation in step 3'.

The MASH 4 then decides, based upon user preference data, how to forward the invitation in step 4'. The user reference data prescribes how user B wants to have the invitation processed. In this case, it is assumed that, user B wants a mobile phone 6 to be used via cellular access, and thus, the invitation is forwarded to the mobile phone 6 via the radio link 5 together with a invitation identity in step 5', which is added by the server to the conversation invitation sent to MASH 4 from A user's terminal 1. A ring signal, or a buzz or a flash, informs user B about the incoming invitation. The invitation identity is shown on the display. The user preference data might also have described that the invitation should be forwarded to some another device, like a PC or a fixed telephone. If the invitation identity would have been forwarded to the PC, it can e.g. be stored on a smart card, which is fed to the PC or in a protocol between the two terminals, e.g. transported over a Bluetooth link.

It is now assumed that user B wishes to respond by using a PC 7 over a fixed access 8 instead of the mobile 6 and responds to the invitation by using the PC in step 6' and providing the invitation identity in the response. The invitation identity can be transferred from device to device by the user itself or it can be stored on a smart card in the mobile and be transferred to the PC by placing the card in the PC or it is transferred by the mobile on the user's command. The invitation identity can also be transferred to the PC by means of a protocol, e.g. transported over a Bluetooth link.

The response is sent in step 7' in figure 3 and in figure 1 via the fixed access 8 over the network 3 and to the MASH 4.

The server associates the response with the previous invitation in step 8', an forwards the response to user A. The fixed access 8 and access 2 is used in the continued communication.

## Claims

1. Method in a communication system for establishing a conversation between one or more users, the communication system comprising user end points, a network, and an intermediate end point, the user end points being connected to the network via different link-layer technologies, comprising the steps of
a) inviting a conversation by a first user with a second user by means of an invitation signal from the first user over the network,
b) receiving the invitation by an intermediate point in the network,
c) allocating an invitation identity to the invitation,
d) the intermediate point forwarding the invitation together with the invitation identity to the second user over the network,
e) informing the second user about the invitation together with the invitation identity,
f) the second user choosing the end point and/or link-layer technology for responding to the conversation invitation,
g) the second user responding to the request with chosen end point and/or link-layer technology by appending the invitation identity,
h) the intermediate point associating the response with said invitation signal and establishing the conversation,
i) using the chosen endpoint and/or link-layer technology chosen in the continued establishment and conversation.

2. Method of claim 1, **characterized** in that the identity allocated in step c) is a RANDOM number or a tag.

3. Method of claim 1 or 2, **characterized** in that in step d), the intermediate point is forwarding the invitation in accordance with user preference data defining how the invitation shall be forwarded to the second user.

4. Method of claim 3, **characterized** in that the user preference data defines the end point and/or link-layer technology with which invitations to the second user shall be forwarded.

5. Method of any of claims 1 - 4, **characterized** in that in step e), the second user is informed about the invitation together with the invitation identity by means of a ringing signal, a buzz, a flash, or by E-mail.

6. Method of any of claims 1 - 5, **characterized** in that in step f), the second user chooses the end point and/or link-layer technology for responding to the conversation invitation on the basis of the available end points and link-layer technology.

7. Method of claim 6, **characterized** in that in step f), the second user chooses the end point and/or link-layer technology for responding to the conversation invitation on the basis of the art of the invited conversation.

8. Method of any of claims 1 - 7, **characterized** in that the end point chosen by the second user in step f) is a fixed telephone, a mobile phone, a PC, a multimedia desktop, a lap top, or an endpoint belonging to a LAN of the second user.

9. Method of any of claims 1 - 7, **characterized** in that the link-layer technology chosen by the second user in step f) is cellular, Ethernet, Token Ring, FDDI, Wireless LAN, Satellite, Bluetooth etc.

10. Method of any of claims 1 - 9, **characterized** in that the conversation invitation in step a) is real time text, audio, audio and text, voice and streaming video, voice and real time video, voice and office tools, VR gaming.

11. Method of any of claims 1 - 10, **characterized** in that the timers in the conversation establishment protocols are adjusted to allow for the time required for the possible change of end point and/or link-layer technology.

12. Method of any of claims 1 - 11, **characterized** in that the first user is informed about the possible change of end point and/or link-layer technology to allow for the time required for the change.

13. Communication system comprising user end points, a network, and an intermediate end point, the user end points being connected to the network via different link-layer technologies, further comprising
a) means for inviting a conversation by a first user with a second user by means of an invitation signal from the first user over the network,
b) means for receiving the invitation by an intermediate point in the network,
c) means for allocating an invitation identity to the invitation,
d) means for forwarding the invitation together with the invitation identity to the second user over the network from the intermediate point,
e) means for informing the second user about the invitation together with the invitation identity,
f) means for responding to the request with chosen end point and/or link-layer technology by appending the invitation identity,
g) means for associating the response with said invitation signal and establishing the conversation at the intermediate point,
h) means for using the chosen endpoint and/or link-layer technology in the continued establishment and data phase.
